# EUROPÄISCHE PATENTANMELDUNG

(11) **EP 1 600 345 A1**
(43) Veröffentlichungstag der Anmeldung: **30.11.2005**
(21) Anmeldenummer: 05008878.0
(22) Anmeldetag: 22.04.2005
(51) Int. Cl.: B60T 8/00, B60C 23/06

(54) **Verfahren zur Ermittlung wenigstens einer kraftfahrzeugspezifischen Information, insbesondere der Fahrgeschwindigkeit und/oder der zurückgelegten Wegstrecke**

(30) Priorität: 29.05.2004 DE 102004026426
(71) Anmelder: AUDI AG, 85045 Ingolstadt (DE)
(72) Erfinder: Schwantner, Stephan, 85072 Eichstätt (DE)
(74) Vertreter: Thielmann, Frank

(57) **Zusammenfassung**

Verfahren zur Ermittlung wenigstens einer kraftfahrzeugspezifischen Information, insbesondere der Fahrgeschwindigkeit und/oder der zurückgelegten Wegstrecke, anhand eines ein Maß für den Umfang eines Reifens wenigstens eines Fahrzeugrades darstellenden Werts, wobei als Maß für den die Information beeinflussenden Ist-Umfang des Reifens mittels wenigstens eines wenigstens einem Fahrzeugrad zugeordneten Sensorelements (6) der Abstand (r) zwischen der Radnabe (4) und der Fahrbahn (5) ermittelt wird, anhand dem die kraftfahrzeugspezifische Information (9,10,11) bestimmt wird.

## Beschreibung

Die Erfindung betrifft ein Verfahren zur Ermittlung wenigstens einer kraftfahrzeugspezifischen Information, insbesondere der Fahrgeschwindigkeit und/oder der zurückgelegten Wegstrecke, anhand eines ein Maß für den Umfang eines Reifens wenigstens eines Fahrzeugrades darstellenden Werts.

Die Ermittlung kraftfahrzeugspezifischer Informationen wie beispielsweise der Fahrgeschwindigkeit oder der zurückgelegten Wegstrecke, aber auch einer Verbrauchs- und Restreichweiteninformation erfolgt heutzutage auf Basis eines Wertes, der ein Maß für den Umfang eines Reifens eines Fahrzeugrades darstellt, in Verbindung mit einem die Raddrehzahl angebenden Wert, der in der Regel von einem Radsensor des Anti Blockier Systems (im Folgenden ABS genannt) abgegriffen wird. Über geeignete Verarbeitungsalgorithmen können anhand dieser Parameter, gegebenenfalls in Verbindung mit weiteren Rechenwerten, insbesondere die obengenannten Informationen ermittelt werden.

Der den Reifenumfang beschreibende Wert gibt jedoch normalerweise nicht den tatsächlichen Umfang eines aufgezogenen Reifens an, vielmehr ist seitens der die Informationsermittlung vornehmenden Einrichtung, also beispielsweise einem Steuergerät, zur Geschwindigkeitsberechnung ein Wert hinterlegt, der den größtmöglichen Reifenumfang aller unterschiedlichen, auf den Fahrzeugtyp aufziehbaren Fahrzeugreifen angibt, zur Wegstreckenberechnung ist ein Wert hinterlegt, der den mittleren Reifenumfang, gemittelt über die durchschnittlichen Umfangswerte aller typenspezifisch aufziehbaren Fahrzeugreifen beschreibt. Hieraus resultieren zwangsläufig beachtliche Abweichungen zwischen beispielsweise der errechneten Geschwindigkeit oder der errechneten zurückgelegten Wegstrecke und der tatsächlich gefahrenen Geschwindigkeit beziehungsweise der tatsächlich zurückgelegten Wegstrecke. Bei Verwendung kleinerer Reifen, deren Ist-Umfang also kleiner als der steuerungsgeräteseitig hinterlegte größtmögliche oder der mittlere Reifenumfangswert ist, wird eine deutliche Erhöhung der Geschwindigkeit ermittelt, die Geschwindigkeitsdifferenz beträgt bis zu ca. 8 %. Im Falle der Wegstreckenberechnung, wo ein gemittelter Reifenumfangswert verwendet wird, variiert die Anzeige bis zu ca. +/- 4 %. Weiterhin wird natürlich auch die basierend auf der ermittelten Wegstrecke berechnete Durchschnitts-Verbrauchsberechnung wie auch die Restreichweitenberechnung mit dieser Toleranz beaufschlagt. Das heißt, dass die relevanten Informationen, auf die sich der Fahrer häufig verlässt, nur relativ ungenau ermittelt werden können, sie sind insbesondere bei einem Wechsel der Bereifung z.B. von Sommerauf Winterreifen oder bei einem Wechsel des Reifentyps etc. dauernden Schwankungen unterlegen.

Der Erfindung liegt damit das Problem zugrunde, ein Verfahren anzugeben, das es ermöglicht, eine möglichst exakte Informationsermittlung vorzunehmen.

Zur Lösung dieses Problems ist bei einem Verfahren der eingangs genannten Art erfindungsgemäß vorgesehen, dass als Maß für den die Information beeinflussenden Ist-Umfang des Reifens mittels wenigstens eines wenigstens einem Fahrzeugrad zugeordneten Sensorelements der Abstand zwischen der Radnabe und der Fahrbahn ermittelt wird, anhand welches Abstands die kraftfahrzeugspezifische Information bestimmt wird.

Während der Stand der Technik im Rahmen der Informationsermittlung auf vorgegebene definierte Werte betreffend den Reifenumfang, die für alle unterschiedlichen typenspezifisch verwendbaren Reifen gleichermaßen gelten, zurückgreift, wird beim erfindungsgemäßen Verfahren der tatsächliche Ist-Umfang des Reifens ermittelt, indem über ein Sensorelement der Abstand zwischen der Radnabe und der Fahrbahn gemessen wird. Über diesen realen Abstand, der den tatsächlichen wirksamen Umfang definiert, ist eine sehr exakte Informationsberechnung möglich, nachdem die realen Verhältnisse ermittelt werden und in die Berechnung eingehen. Das erfindungsgemäße Ermittlungsverfahren arbeitet sehr exakt, unabhängig davon, welcher Reifen nun aufgezogen ist, nachdem erfindungsgemäß der tatsächliche, die Information beeinflussende Ist-Umfang ermittelt wird, mithin also mit realen Werten gerechnet wird, egal ob nun Sommer- oder Winterreifen aufgezogen sind, oder von einem Komfortreifen auf einen Niederquerschnittsreifen gewechselt wird.

Ein weiterer Vorteil ist darin zu sehen, dass auch jedwede Umfangsänderung, die aus dem üblichen Kraftfahrzeugbetrieb resultiert, hierüber erfasst werden kann. Das heißt, es kann ein statischer Ist-Umfang ermittelt werden, wenn also das Fahrzeug stillsteht, wie auch eine dynamische Umfangsänderung, wenn das Fahrzeug z.B. mit höheren Geschwindigkeiten unterwegs ist oder in eine Kurve fährt, und der reale Ist-Umfang aufgrund der auf die Reifen einwirkenden Antriebsenergie oder der Walkarbeit dynamisch variiert.

Anders als im Stand der Technik kann also mit dem erfindungsgemäßen Verfahren zu jedem Zeitpunkt eine äußerst exakte Informationsermittlung auf Basis des vom Sensorelements gelieferten Abstandswerts, der beispielsweise an ein Steuergerät, das der Steuerung beispielsweise der Kombianzeige im Armaturenbrett dient, erfolgen, nachdem erfindungsgemäß zu jedem Zeitpunkt nur der aktive Reifenradius und damit der tatsächliche Laufumfang ermittelt und berücksichtigt wird.

Die Abstandsermittlung selbst kann im Wesentlichen kontinuierlich erfolgen, auch eine intermittierende Erfassung, beispielsweise alle 50 oder 100 Millisekunden oder im Sekundenbereich ist denkbar.

Wie beschrieben ist es möglich, die Fahrgeschwindigkeit und/oder die zurückgelegte Wegstrecke zu ermitteln, auch können Informationen betreffend den Momentan- oder Durchschnitts-Kraftstoffverbrauch auf Basis dieses IstWerts und/oder die Restreichweite erfasst werden. Weiterhin können auch Informationen betreffend die Fahrbahnbeschaffenheit erfasst werden, indem der zeitliche Verlauf des Abstandssignals ausgewertet wird. Bei einer Fahrt beispielsweise über ein Kopfsteinpflaster wird bedingt durch die Fahrbahnunebenheiten der Reifen sehr häufig verformt und deformiert, was zu einer laufenden Änderung des Abstandswertes führt. Wird nun der zeitliche Verlauf des Abstandswerts ermittelt, kann auf die Eben- oder Unebenheit der Fahrbahn geschlossen werden, und beispielsweise in Abhängigkeit dieser Information die Einstellung des Fahrwerks oder der Fahrzeugdämpfer etc. variiert und angepasst werden.

Weiterhin ist es denkbar, nicht nur ein den Abstandswert lieferndes Sensorelement vorzusehen, auf dessen Basis die beschriebenen Fahrzeugspezifischen Informationen ermittelt werden können, sondern allen Fahrzeugrädern jeweils wenigstens ein Sensorelement zuzuordnen, so dass zu jedem Fahrzeug die Ist-Abstände beziehungsweise wirksamen Ist-Radien erfasst werden. Dies ermöglicht es, anhand des jeweils radspezifischen Abstands eine radspezifische Information betreffend den Reifendruck und/oder den Reifenverschleiß und/oder eine Radunwucht und/oder anhand der mehreren Abstandswerte eine Information betreffend den Fahrzeugbeladungszustand zu ermitteln. Wird zu jedem Rad der Abstandswert über die Zeit ausgewertet, kann beispielsweise eine allmähliche Reifendruckänderung erfasst werden, wie auch im Falle einer abrupten Änderung natürlich auch ein platter Reifen detektiert werden kann. Über eine längerfristige Auswertung kann auch der Reifenverschleiß erfasst werden, wenn also der Reifen im Laufe der Zeit abgefahren wird. Daneben kann auch eine Unwucht eines Reifens ermittelt werden. In diesem Fall zeigt der zeitliche Verlauf des Abstandswerts kleine, symmetrische frequenzielle Änderungen, die auf eine Unwucht schließen lassen.

Während natürlich Informationen in Form der Fahrgeschwindigkeit wie auch der Wegstrecke laufend ausgegebenen werden, ist es denkbar, die weiteren auf Basis des Ist-Umfangwerts ermittelbaren Informationen beispielsweise auf eine fahrerseitige Anforderung hin auszugeben, wie im Falle des Momentan- oder Durchschnittskraftstoffverbrauchs oder der Restreichweiteninformation. Andere Informationen, vornehmlich solche, die eine mögliche Gefährdung mit sich bringen, wie beispielsweise ein zu niedriger Reifendruck oder ein Reifenverschleiß oder eine Reifenunwucht können selbsttätig in Abhängigkeit des Informationsgehalts, wenn eben Handlungsbedarf besteht, in Form einer Warninformation an den Fahrer ausgegeben werden.

Neben dem erfindungsgemäßen Verfahren betrifft die Erfindung ferner ein Kraftfahrzeug mit einer Einrichtung zur Ermittlung wenigstens einer kraftfahrzeugspezifischen Information, insbesondere der Fahrgeschwindigkeit und/oder der zurückgelegten Wegstrecke, anhand eines ein Maß für den Umfang eines Reifens wenigstens eines Fahrzeugrades darstellenden Werts. Die Einrichtung weist erfindungsgemäß wenigstens ein wenigstens einem Fahrzeugrad zugeordnetes Sensorelement zur Ermittlung des Abstands zwischen der Radnabe und der Fahrbahn als Maß für den die Information beeinflussenden Ist-Umfang des Reifens auf, anhand welchem Abstandswert die kraftfahrzeugspezifische Information bestimmt wird. Dieses oder jedes Sensorelement (wenn beispielsweise jedem Fahrzeugrad ein Sensorelement zugeordnet ist) ist in fester, bekannter Lagebeziehung zur Radnabe an einem Radträger angeordnet. Es kann dabei in der Ebene der Radnabe positioniert sein, oder aber in jeder anderen Position, solange der Abstand zur Radnabe bekannt ist.

Die Einrichtung selbst, umfassend natürlich ein oder mehrere Steuergeräte, die die Informationsermittlung vornehmen, kann zur Ermittlung einer Information in Form der Fahrgeschwindigkeit und/oder der zurückgelegten Wegstrecke und/oder des Momentan- oder Durchschnitts-Kraftstoffverbrauchs und/oder der Restreichweite und/oder der Fahrbahnbeschaffenheit anhand wenigstens eines Abstandswerts ausgebildet sein. Ist allen Fahrzeugrädern wenigstens ein Sensorelement zugeordnet, ist die Einrichtung des Weiteren zur Ermittlung einer radspezifischen Information betreffend den Reifendruck und/oder den Reifenverschleiß und/oder einer Radunwucht anhand des jeweiligen radspezifischen Abstandswerts und/oder betreffend den Fahrzeugbeladungszustand anhand der mehreren Abstandswerte ausgebildet. Die jeweilige Information oder eine Warninformation etc. kann zweckmäßigerweise über eine Anzeigeeinrichtung, insbesondere ein Display ausgegeben werden. Die Geschwindigkeit und die Wegstrecke werden an den üblichen Instrumenten (Tachometer beziehungsweise Kilometerzähler) ausgegeben, während alle anderen Informationen gleich welcher Art beispielsweise über ein Display, das mittlerweile in vielen Fahrzeugen vorhanden ist, dem Fahrer zur Information gebracht werden können.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung zur Ermittlung des Abstands RadnabeFahrbahn sowie daraus resultierend der Informationsermittlung, und
- Fig. 2: eine Prinzipskizze eines erfindungsgemäßen Kraftfahrzeugs mit jeweils einem jeweils einem Fahrzeugrad zugeordneten Sensorelement.

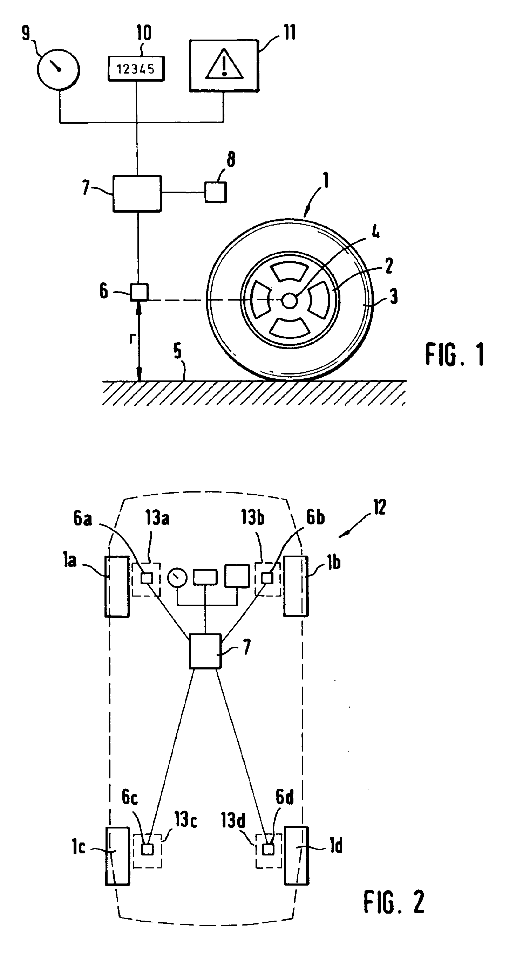

Fig. 1 zeigt eine Prinzipskizze zur Darstellung der erfindungsgemäßen Informationsermittlung. Gezeigt ist ein Fahrzeugrad 1 umfassend eine Felge 2, auf die ein Fahrzeugreifen 3 aufgezogen ist. Das Rad 1 weist eine Radnabe 4 auf, die die Rotationsachse bildet. Das Rad 1 steht auf einer Fahrbahn 5, aufgrund des Fahrzeuggewichts wird der Reifen 3 im Auflagebereich etwas deformiert.

Dem Rad 1 zugeordnet ist ein Sensorelement 6, das, wie in Fig. 2 gezeigt ist, an einem Radträger 7 lagefest und in bekanntem Abstand zur Radnabe 4 angeordnet ist. Im gezeigten Beispiel gemäß Fig. 1 befindet sich das Sensorelement in der Ebene der Radnabe 4. Über das Sensorelement 6 wird nun kontinuierlich oder in kurzen intermittierenden Abständen der Abstand der Radnabe 4 zur Fahrbahnoberfläche 5 ermittelt. Dieser Abstand r entspricht dem wirksamen Ist-Radius des Rades 1. Dieser wirksame Ist-Radius definiert den tatsächlichen Laufumfang, der in die nachfolgende Berechnung der Geschwindigkeit, Wegstrecke etc. eingeht. Im Hinblick auf die übliche Rauhigkeit der Fahrbahnoberfläche nimmt das Sensorelement z.B. mehrere benachbarte Messpunkte auf oder scannt einen definierten Flächenbereich ab, um z.B. über Mittelwertbildung oder dergleichen den hinsichtlich der Rauhigkeit korrigierte Abstand zu bestimmen.

Aus Fig. 1 ist ersichtlich, das aufgrund der kontinuierlichen Abstandserfassung jedwede Änderung des Abstandes zwischen Radnabe 4 und der Fahrbahn erfasst werden kann. Eine solche Änderung kann beispielsweise betriebsbedingt sein, wenn das Fahrzeug beschleunigt oder bremst oder eine Kurvenfahrt vorgenommen wird, wenn der Luftdruck langsam oder schnell sinkt, wenn aufgrund einer Belastung durch Beladung des Fahrzeugs der Reifen platt gedrückt wird und natürlich auch, wenn ein anderer Reifen aufgezogen wird, beispielsweise bei einem Wechsel von einem Sommer- auf einen Winterreifen.

Der jeweils gemessene Abstandswert r wird vom Sensorelement 6 an ein Steuergerät 7 gegeben, das zusätzlich die Information betreffend die Raddrehzahl, aufgenommen über einen Radsensor 8, der z.B. Teil eines ABS ist, erhält. Das Steuergerät 7 kann nun anhand des Abstandswerts r den tatsächlichen aktuell wirksamen Reifenumfang ermitteln, der sich gemäß Uᵢₛₜ = 2 · r · π ergibt.

In Verbindung mit dem Drehzahlwert kann nun das Steuergerät 7 eine Reihe diverser kraftfahrzeugspezifischer Informationen ermitteln. Zum einen kann daraus die aktuelle Fahrgeschwindigkeit ermittelt werden, die bekanntlich an einem Tachometer 9 angezeigt wird. Weiterhin kann die zurückgelegte Wegstrecke ermittelt werden, die bekanntlich an einem Kilometerzähler 10 ausgegeben wird. Schließlich können noch weitere Informationen wie beispielsweise der momentane Kraftstoffverbrauch oder die in Bezug auf die noch im Tank befindliche Kraftstoffmenge mögliche Restreichweite ermittelt werden, die an einer Anzeigeeinrichtung 11, z.B. einem Display oder Bildschirm, ausgegeben werden kann. Dies kann auf Wunsch des Fahrers erfolgen, der diese Information gezielt abfragen kann.

Zur Ermittlung der Geschwindigkeit, der Wegstrecke wie auch der Verbrauchs- und Reichweiteninformation ist die Verwendung lediglich eines Sensorelements 6 erforderlich. Dieses ist zweckmäßigerweise einem nicht angetriebenen Rad zugeordnet, um zu vermeiden, dass der ermittelte Abstandswert aufgrund eines möglichen Radschlupfes beim Antrieb beeinflusst wird. Sofern der Schlupf seitens des Steuergeräts 7 herausgerechnet werden kann, kann das Sensorelement 8 natürlich auch an einem angetriebenen Rad positioniert sein.

Fig. 2 zeigt ein erfindungsgemäßes Kraftfahrzeug 12, wobei hier jedem Fahrzeugrad 1 a, 1b, 1 c, 1 d jeweils ein Sensorelement 6a, 6b, 6c, 6d zugeordnet ist, das jeweils an einem Radträger 13a, 13b, 13c, 13d in fester Lagebeziehung zur jeweiligen Radnabe positioniert ist. Sämtliche vom jeweiligen Sensorelement 6a - 6d gemessenen radspezifischen Abstandwerte werden dem zentralen Steuergerät 7 gegeben, das die entsprechende Informationsermittlung vornimmt. Zum einen können bei dieser Ausgestaltung die bereits zu Fig. 1 erwähnten Informationen erfasst werden. Zum anderen kann, nachdem die Abstandswerte zu jedem einzelnen Rad aufgenommen werden, auch radspezifische Informationen ausgewertet und errechnet werden. Diesbezüglich ist beispielsweise die Erfassung eines zu niedrigen Reifendrucks, der in einem stetig platter werdenden Reifen resultiert, was mithin zu einer Änderung des Abstands beziehungsweise wirksamen Ist-Radius führt, zu nennen. Dies kann langsam erfolgen, wenn also die Luft nur langsam aus dem Reifen entweicht, wozu das Steuergerät 7 die aufgenommenen Abstandswerte über die Zeit auswertet. Ein plötzlich platter Reifen wird durch eine plötzliche Abstandsänderung infolge einer sehr schnellen Druckreduzierung erfasst.

Denkbar ist auch eine Unwuchterkennung eines Reifens, die sich in Form frequenzieller, sich symmetrisch wiederholender Änderungen des Abstandswertes, ausgewertet über die Zeit, zeigen. Bei einer Unwucht ändert sich unwuchtbedingt in einer bestimmten Radstellung jeweils der Abstand, was sich in jeweiligen Ausschlägen in der aufgenommenen Abstandswertekurve zeigt. Diese können ausgewertet werden und auf eine Unwucht geschlossen werden.

Weiterhin ist auch eine Verschleißerfassung für jeden einzelnen Reifen möglich, die sich in einer langsamen Abstandsänderung über mehrere Wochen, Monate oder Jahre zeigt, wobei das Steuergerät 7 die Abstandswerte entsprechend lange speichert und natürlich auch entsprechend auswerten kann und mit hinterlegten Sollwerten vergleichen kann. Ergibt der Vergleich, dass der oder die Reifen abgefahren sind, wird das Warnsignal gegeben.

Weiterhin kann auch der Beladungszustand erfasst werden. Wird beispielsweise der Kofferraum schwer beladen, werden die hinteren Räder stark belastet, die beiden Reifen werden stark deformiert, der Abstand ändert sich relativ deutlich. Unterschreitet der gemessene Abstandswert an einem oder beiden Reifen beispielsweise einen Soll-Wert, kann eine einseitige oder beidseitige Überladung erfasst und angezeigt werden.

Weiterhin kann - bereits auf Basis nur eines Sensorelements - auch eine Fahrbahnerkennung vorgenommen werden, beispielsweise eine sehr unebene Fahrbahn, die zu kontinuierlichen, jedoch nicht symmetrischen Änderungen der Abstandswerte führt. Denkbar ist beispielsweise die Erfassung eines Kopfsteinpflasters oder einer sehr unebenen, mit Schlaglöchern versehenen Straße. In Abhängigkeit dieser Information kann dann beispielsweise eine entsprechende Einstellung der Fahrwerkregelung oder der Dämpferregelung erfolgen.

Nachdem es sich bei den meisten dieser zusätzlichen Informationen um durchaus kritische, den Fahrbetrieb beeinflussende Informationen handelt, wird im Bedarfsfall über die Anzeigeeinrichtung 11 beispielsweise eine entsprechende Warninformation ausgegeben. Wird beispielsweise ermittelt, dass einer der Reifen einen zu geringen Reifendruck aufweist, wird dies dem Fahrer über eine geeignete Information, die auch den betroffenen Reifen angibt, dargestellt. Entsprechendes gilt im Falle einer Überladung etc.

Abschließend ist darauf hinzuweisen, dass als Sensorelement jedwedes einen Abstand erfassendes Sensorelement verwendet werden kann, beispielsweise ein Infrarotsensor, ein Ultraschallsensor oder ein Radarsensor. Sofern nötig, sind zur Informationsermittlung oder zur Entscheidung, ob eine Warninformation ausgegeben wird, im Steuergerät Vergleichs-Soll-Werte hinterlegt, bei deren Unterschreiten oder Überschreiten durch den bestimmten Informationswert z.B. die Warninformation ausgegeben wird.

## Patentansprüche

1. Verfahren zur Ermittlung wenigstens einer kraftfahrzeugspezifischen Information, insbesondere der Fahrgeschwindigkeit und/oder der zurückgelegten Wegstrecke, anhand eines ein Maß für den Umfang eines Reifens wenigstens eines Fahrzeugrades darstellenden Werts,
**dadurch gekennzeichnet,**
**dass** als Maß für den die Information beeinflussenden Ist-Umfang des Reifens mittels wenigstens eines wenigstens einem Fahrzeugrad zugeordneten Sensorelements der Abstand zwischen der Radnabe und der Fahrbahn ermittelt wird, anhand dem die kraftfahrzeugspezifische Information bestimmt wird.

2. Verfahren nach Anspruch 1,
**dadurch gekennzeichnet,**
**dass** die Abstandsermittlung kontinuierlich oder intermittierend erfolgt.

3. Verfahren nach Anspruch 1 oder 2,
**dadurch gekennzeichnet,**
**dass** gegebenenfalls neben der Fahrgeschwindigkeit und/oder der zurückgelegten Wegstrecke anhand des Abstands eine Information betreffend den Momentan- oder Durchschnitts-Kraftstoffverbrauch und/oder die Restreichweite und/oder die Fahrbahnbeschaffenheit ermittelt wird.

4. Verfahren nach einem der vorangehenden Ansprüche,
**dadurch gekennzeichnet,**
**dass** allen Fahrzeugrädern jeweils wenigstens ein Sensorelement zugeordnet ist, und dass anhand des jeweiligen radspezifischen Abstands eine radspezifische Information betreffend den Reifendruck und/oder den Reifenverschleiß und/oder eine Radunwucht und/oder anhand der mehreren Abstandswerte eine Information betreffend den Fahrzeugbeladungszustand ermittelt wird.

5. Verfahren nach Anspruch 3 oder 4,
**dadurch gekennzeichnet,**
**dass** auf eine fahrerseitige Anforderung hin oder in Abhängigkeit des Informationsgehalts bei Bedarf die Information selbst oder eine Warninformation an den Fahrer ausgegeben wird.

6. Kraftfahrzeug mit einer Einrichtung zur Ermittlung wenigstens einer kraftfahrzeugspezifischen Information, insbesondere der Fahrgeschwindigkeit und/oder der zurückgelegten Wegstrecke, anhand eines ein Maß für den Umfang eines Reifens wenigstens eines Fahrzeugrades darstellenden Werts,
**dadurch gekennzeichnet,**
**dass** die Einrichtung wenigstens ein wenigstens einem Fahrzeugrad (1, 1 a, 1 b, 1 c, 1 d) zugeordnetes Sensorelement (6, 6a, 6b, 6c, 6d) zur Ermittlung des Abstands (r) zwischen der Radnabe (4) und der Fahrbahn (5) als Maß für den die Information beeinflussenden Ist-Umfang (Uᵢₛₜ) des Reifens (3), anhand welchem Abstandswert (r) die kraftfahrzeugspezifische Information bestimmt wird, aufweist.

7. Kraftfahrzeug nach Anspruch 6,
**dadurch gekennzeichnet,**
**dass** das oder jedes Sensorelement (6, 6a, 6b, 6c, 6d) in fester, bekannter Lagebeziehung zur Radnabe (4) an einem Radträger (13a, 13b, 13c, 13d) angeordnet ist.

8. Kraftfahrzeug nach Anspruch 6 oder 7,
**dadurch gekennzeichnet,**
**dass** die Einrichtung zur Ermittlung einer Information in Form der Fahrgeschwindigkeit und/oder der zurückgelegten Wegstrecke und/oder des Momentan- oder Durchschnitts-Kraftstoffverbrauchs und/oder der Restreichweite und/oder der Fahrbahnbeschaffenheit anhand wenigstens eines Abstandswerts ausgebildet ist.

9. Kraftfahrzeug nach einem der Ansprüche 6 bis 8,
**dadurch gekennzeichnet,**
**dass** allen Fahrzeugrädern (1 a, 1 b, 1 c, 1 d) jeweils wenigstens ein Sensorelement (6a, 6b, 6c, 6d) zugeordnet ist, und die Einrichtung zur Ermittlung einer radspezifischen Information betreffend den Reifendruck und/oder den Reifenverschleiß und/oder eine Radunwucht anhand des jeweiligen radspezifischen Abstands (r) und/oder betreffend den Fahrzeugbeladungszustand anhand der mehreren Abstandswerte (r) ausgebildet ist.

10. Kraftfahrzeug nach einem der Ansprüche 6 bis 9,
**dadurch gekennzeichnet,**
**dass** der Einrichtung wenigstens eine Anzeigeeinrichtung (9, 10, 11), insbesondere ein Display zugeordnet ist, an dem auf eine fahrerseitige Anforderung hin oder in Abhängigkeit des Informationsgehalts bei Bedarf die Information selbst, insbesondere in Form des Momentan- oder Durchschnitts-Kraftstoffverbrauchs und/oder der Restreichweite, oder eine Warninformation an den Fahrer ausgegebbar ist.
